# EUROPEAN PATENT APPLICATION

(11) **EP 2 611 041 A1**
(43) Date of publication of application: **03.07.2013**
(21) Application number: 11196082.9
(22) Date of filing: 29.12.2011
(51) Int. Cl.: H04B 5/00

(54) **Element with wireless power transmitter unit and use of a lighting arrangement for marking out by light a wireless power transmitter area on such element**

(71) Applicant: Koninklijke Philips Electronics N.V., 5621 BA Eindhoven (NL)
(72) Inventor: Willemsen, Oscar Hendrikus, 5600 AE Eindhoven (NL); Van Herpen, Maarten Marinus Johannes Wilhelmus, 5600 AE Eindhoven (NL); Wolf, Ronald Martin, 5600 AE Eindhoven (NL)
(74) Representative: Damen, Daniel Martijn

(57) **Abstract**

The invention provides a the use of a lighting arrangement hidden behind a top surface of an element cover of an element comprising a wireless power transmitter unit also behind the top surface, for marking out by light a wireless power transmitter area on (at) said top surface for positioning an electronic device comprising a wireless power receiver unit configured for receiving wireless power from the wireless power transmitter unit.

## Description

### FIELD OF THE INVENTION

The invention relates to an element, such as a desk, wall or floor, comprising a wireless power transmitter unit, as well as to a combination of such element, with an optional control unit, and an electronic device (that can be charged or powered (continuously) by the wireless power transmitter of the element), such as a lamp or a laptop.

### BACKGROUND OF THE INVENTION

Wireless power transfer in interior elements is known in the art. The international patent application WO/2010/093723, for instance, describes wireless power transfer for furnishes and building elements. A power transmitting device is attached to an existing furniture item or is embedded in a host furnishing. The power transmitting device includes a transmit antenna to wirelessly transfer power to a receive antenna by generating a near field radiation within a coupling- mode region. An amplifier applies a driving signal to the transmit antenna. A presence detector detects a presence of a receiver device within the coupling- mode region. The presence detector may also detect a human presence. An enclosed furnishing detector detects when the furnishing item is in a closed state. A power output may be adjusted in response to the closed state, the presence of a receiver device, and the presence of a human.

### SUMMARY OF THE INVENTION

There already exist many devices that can charge mobile devices and batteries wirelessly. Multi chargers are on the market, which may charges cell phones, PDAs, laptops, etc. by means of inductive power transfer.

In the current standard (System Description Wireless Power Transfer Volume I: Low Power; Part 1: Interface Definition, Version 1.0.2, April 2011), recognition is done by sending a ping signal from the coils of the power infrastructure. When a receiving application recognizes the ping, it will send an acknowledge signal and an identification signal. After correct identification, the correct coil closest to the receiver coil will start to transfer power to the receiving application. However, recognition is only possible if sender and receiver coils are brought in close vicinity. Hence, for a large surface solution that is invisible the recognition can become difficult if the density of coils or active islands with more coils concentrated together on the surface is low.

Flexibility in the positioning of a lighting system in the absence of wires is very much appreciated by consumers. In a consumer research it appeared that the lighting system should always be ready for use (thus excluding battery solutions) and that the underlying electrical infrastructure in the mounting surface should be made totally invisible (for the human eye). When aiming for total freedom of positioning on a large surface, the solution will become costly, since the complete surface should be covered by hidden wiring. A cheaper solution would be to cover the surface with power means that are positioned on a grid and that only grid locations are accessible to generate power. However, this is counterproductive with the requirement of the electrical grid needing to be invisible, since with a low density of locations for power it is difficult to find the power location.

Hence, it is an aspect of the invention to provide an alternative element, such as a desk, a wall, or a floor, with wireless power transmitter unit, which preferably further at least partly obviate one or more of above-described drawbacks.

The current invention proposes to include an indication system that is invisible when it is inactive. For instance, only when an electrical appliance or the user thereof gives the indication that it needs to be powered, the indication system will be activated, resulting in a visual indication (by light of one or more lighting units) of the position of the active area of the power grid (herein further called wireless power transmitter area).

In a first aspect, the invention provides a combination of a control unit and an element, the element comprising (a) an element cover comprising a top surface, with a user side and an element side, the top surface having a top surface area, (b) a wireless power transmitter unit having a transmitter area configured behind the top surface at the element side, (c) a lighting arrangement comprising one or more lighting units for generating visible light, wherein the one or more lighting units are configured behind the top surface at the element side; wherein the transmitter area and the one or more lighting units when seen from the user side are hidden behind the top surface, wherein the top surface further comprises one or more light outcoupling regions, for outcoupling of the lighting unit light of the one or more lighting units, and wherein the one or more light outcoupling regions mark out the wireless power transmitter area; and the control unit being configured to control the lighting arrangement as function of one or more of a signal of a user input device and a signal containing information on one or more parameters of an electronic device, wherein the electronic device (not necessarily comprised in the combination) comprises a wireless power receiver unit, and wherein the one or more parameters are selected from the group consisting of (1) the presence of the electronic device, (2) the identity of electronic device, (3) the type of wireless power receiver unit of the electronic device, (4) the distance between the wireless power receiver of the electronic device and the transmitter area of the wireless power transmitter unit, and (5) the required power of the electronic device.

The invention provides in a further aspect also the element per se, i.e. an element comprising (a) an element cover comprising a top surface, with a user side and an element side, the top surface having a top surface area, (b) a wireless power transmitter unit having a transmitter area configured behind the top surface at the element side (wherein the wireless power transmitter unit is configured to provide wireless power to a wireless power receiver unit of an electronic device (when the wireless power receiver unit of the electronic device is arranged at the user side within a wireless power transmitter distance from a wireless power transmitter area at the top surface)), and wherein in an embodiment especially the ratio of a (the) wireless power transmitter area at the top surface and the total top surface area is equal to or smaller than 0.7, and (c) a lighting arrangement comprising one or more lighting units for generating visible light, wherein the one or more lighting units are configured behind the top surface at the element side; wherein the transmitter area and the one or more lighting units when seen from the user side are hidden behind the top surface, wherein the top surface further comprises one or more light outcoupling regions, for outcoupling of the lighting unit light of the one or more lighting units, and wherein the one or more light outcoupling regions mark out the wireless power transmitter area.

With such element, it is not necessary to arrange behind the entire element top surface area wireless power transmitter units (which saves cost and which may save energy). Further, it is not necessary, though not excluded, to use complicated recognition devices and protocols, and, although the wireless power transmitter units and the one or more lighting units are not visible by a user, the light of the lighting unit behind the top surface may clearly mark out to a user where to arrange the electronic device that can be electrically powered by the hidden wireless power transmitter unit.

In this way, design may be freer and may be more appreciated. Further, less features in or on the element cover may be needed, and as indicated above, the area that is served by the wireless power transmitter unit(s) may be smaller, thereby saving costs, space and material.

The term "electrically powering" and similar terms may especially refer to charging an electrical device or continuously powering an electrical device. For instance, in an embodiment an electrical device may be charged for a specific period of time, especially when such device comprises a battery, but in another embodiment, an electronic device may also (continuously) be powered. In the latter embodiment, a chargeable battery may not be necessary. In yet a further embodiment, the electrical device may (simultaneously) be charged and continuously be powered.

Herein, the element may for instance be selected from the group comprising a piece of (indoor, but also outdoor) furniture, an internal piece of a transport vehicle (like a boat, a ship, a car, a train, a plane), a part of a wall, a wall, a part of a floor, a floor, a part of a ceiling, and a ceiling. For instance, the element may be a table, a desk, a bar, a chair, a windowsill, a dashboard, or part of such item. The element may also be a wall or a floor, or part thereof. In a specific embodiment, the element may be a floor or a part thereof, as part of an electric vehicle loading station. In such instance, the vehicle may for instance be selected from the group consisting of an electric car, an electric moped, an electric scooter, an electric bike, etc. Such electric vehicles may optionally also include other means of motorized transport (i.e. other than electric). The term "internal piece of a transport vehicle may for instance refer to a dashboard, a table in a car, a table in a plane, etc.

Such element comprises an element cover. The term element cover may in an embodiment refer to any layer which may close at least part of the element, or hide at least part of the element, and which cover is at least partly a barrier between the wireless power transmitter unit and a wireless power receiver unit. Hence, when electrically powering the wireless power receiver unit, there is a physical barrier between the wireless power receiver unit and the wireless power transmitter unit, which consists at least partly of part of the element cover. In an embodiment, the element cover may comprise the same material as the element. In yet another embodiment, the element cover may be another material. In an embodiment, the element comprises a wall, and the element cover comprises wall paper, or plaster, a drywall panel, a goblin, etc. In an embodiment, the element comprises a floor, and the cover layer comprises a carpet, carpet tile(s), linoleum, wood, or laminate, etc. In an embodiment, the element comprises a desk, and the element cover comprises an upper layer of the desk or a cover layer on the desk.

The element cover has a top surface. For instance, an electronic device comprising a wireless power receiver unit, may be arranged on such top surface, and can then be electrically powered. The top surface is the interface between the user side and the element side. Hence, the element border may at least partly formed by the top surface. Behind the top surface, the interior of the element is arranged. The user may perceive the user top surface from the user side. When seen from the user, behind the top surface, the element items, such as for instance the wireless power transmitter unit, are arranged.

For instance, in a horizontal arrangement the top surface may be substantially parallel to the earth's surface, with the wireless power transmitter unit below the top surface, and optionally an electronic device on (or above) the top surface for electrically powering such device. The wireless power transmitter unit has transmitter area. This transmitter area is behind the top surface but may in an embodiment be integrated with the element cover. In yet another embodiment, the transmitter area is behind the element cover, see further also below. In an embodiment, the transmitter area can be considered the surface of the wireless power transmitter unit that is configured to transmit (efficiently) the electrical field. For instance, assuming a coil-based wireless power transmitter unit, the area of such coil can be considered the transmitter area.

Further, the element cover has a top surface area. In general this will be a flat area, on which an electronic device can be arranged to be electrically powered by the wireless power transmitter unit. This area is larger than the area (the "wireless power transmitter area") at the top surface that can be served by the wireless power transmitter unit. As indicated above, this saves material and money, etc.

The element cover will in general be a plate, for instance having a thickness in the range of 0.01-20 mm, especially in the range of 0.05-15 mm, such as for instance 0.5-1.5 cm. The material of the element cover may be ceramic, glass, polymer, composite, etc. In an embodiment, this plate may have a constant thickness, without recessions at the back surface. In yet another embodiment, the plate may have recessions at the back side, for instance for positioning (part of) a lighting unit.

Especially, the element cover has a low transmission for visible light. For instance, the transmission for visible light may be in the range of up to 30%, such as 1-30%, like up to 20%, such as 1-20%, like up to 15%, such as 2-15%. As in principle part of the lighting unit(s) may be integrated in the element cover, the part of the element cover downstream of the one or more lighting units may have a transmission in the range of 1-30%, such as 1-20%, like 2-15%. Hence, to transmit the light of the lighting units, there are no through holes in the element cover. The lighting unit light has to penetrate through the material of the element cover.

As indicated above, it is not desirable that other parts, like the wireless power transmitter unit, behind the top surface, are visible (for a user at the user side). Hence, those values for the transmission may apply to the entire element cover. Hence, in general the part of the element cover downstream of the transmitter area may also have a transmission in the range of up to 30%, such as 1-30%, like up to 20%, such as 1-20%, like up to 15%, such as 2-15%. In an embodiment, the element cover is opaque.

Hence, in this way, the transmitter area and the one or more lighting units when seen from the user side may be hidden behind the top surface, but the element cover is transmissive for the visible light of the one or more lighting units. In this way, the wireless power transmitter unit, (other) electronics, electrical wires, the one or more lighting units (see further below), are invisible for the (human) user when looking from the user side to the element cover. Therefore, the transmitter area and the one or more lighting units when seen from the user side are hidden behind the top surface, but the element cover is (nevertheless) transmissive for the visible *light* emitted by the one or more lighting units when they are in the on state (see also below). As indicated above, the transmission for visible light may in an embodiment vary over the element cover. In general, however, the transmission of the entire cover will be equal to or below 30%, or even lower (see above indicated ranges).

The transmission or light permeability can be determined by providing light at a specific wavelength with a first intensity to the material and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989). Methods to determine the transmission are known in the art.

The element further comprises a wireless power transmitter unit. Herein, the term "wireless power transmitter unit" may in an embodiment also refer to a plurality of such units. In such embodiment, the element cover will in general also comprise a plurality of (corresponding) wireless power transmitter areas. The wireless power transmitter unit has a transmitter area. This surface is behind the top surface, but at the top surface, an area is available, indicated as wireless power transmitter area, where the wireless power transmitter unit can electrically power an electronic device when brought in the vicinity of that area. Especially, when such electronic device is arranged at the user side within a wireless power transmitter distance from a wireless power transmitter area at the top surface, the electronic device may be electrically powered.

As indicated above, this wireless power transmitter area is not marked per se. Otherwise, the one or more lighting units would not be necessary for indication. In general, the top surface will not show any indication where the wireless power transmitter unit and/or the one or more lighting units are located behind the top surface.

The transmitter area behind the top surface and the wireless power transmitter area are substantially corresponding, i.e. when seen from the wireless power transmitter unit, the area at the surface in line with the transmitter area may function as wireless power transmitter area (at the top surface). However, the wireless power transmitter area at the surface may be larger than the transmitter area of the wireless power transmitter unit behind the top surface, see also below.

As indicated above, the ratio of the wireless power transmitter area and the total top surface area is preferably equal to or smaller than 0.7, such as in the range of 0.1-0.7, like in the range of 0.1-0.4. For larger areas, this ratio may be smaller, like in the range of 0.001-0.7, like 0.001-0.2, such as 0.001-0.1, or even less than 5%.

The wireless power transmission may be based on inductive and/or on capacitive power transfer. Hence, in an embodiment the wireless power transmitter unit comprises a wireless inductive power transmitter. In another embodiment, which may optionally be combined with the former, the wireless power transmitter unit comprises a wireless capacitive power transmitter.

The element further comprises a lighting arrangement, which comprises one or more lighting units. The lighting units may especially comprise light emitting diodes (LEDs), especially solid state light emitting devices. However, in an embodiment also OLED's may be applied and in another embodiment, incandescent lamps may be applied. In yet another embodiment, fluorescent lamps may be applied. However, preferably LEDs, especially solid state LEDs are applied as lighting units.

The lighting unit is configured to provide lighting unit light. This may be white light, however this may also be colored light. In an embodiment, the plurality of lighting units comprise lighting units emitting different types of light. The terms "visible light" or "visible emission" refer to light having a wavelength in the range of about 380-750 nm.

In a specific embodiment, the lighting unit comprises a light source that is configured to provide light that is at least partly converted by a luminescent material. For instance, the light source may be configured to provide UV light or blue light. In the former variant, the UV light may be converted by one or more luminescent materials, such as one or more of blue, green, yellow, red or orange luminescent materials, or a combination of two or more of such materials. In the latter variant, the blue light may be converted by one or more luminescent materials, such as one or more of green, yellow, red or orange luminescent materials, or a combination of two or more of such materials. The luminescent material may be part of the light source, such as an LED with luminescent material on the LED die and/or in a resin, but the luminescent material, may also be configured remote from the light source. For instance, between the light source and the front surface, luminescent material may be provided. In an embodiment, this luminescent material may be integrated in the element cover. In yet another embodiment, which may optionally be combined with the former, the luminescent material is applied as layer to the back surface of the element cover. Such luminescent material may especially be applied between the light source and the back surface, thereby in an embodiment creating luminescent material spots (at the back surface of the element cover).

The one or more lighting units (and lighting arrangement comprising the one or more lighting units) are arranged behind the top surface and are (in the off-state) not visible to the user. The one or more lighting units are configured to provide light in a direction of the top surface (when switched on). Part of this light will be transmitted by the element cover and escape thereof at the top surface. This leads to one or more light spots at the top surface. These spots, provided by the light of the one or more lighting units, are herein further indicated as light outcoupling regions. They may also be called light escape regions, because at those regions at the top surface light escapes from the top surface. Those regions are used to mark out the wireless power transmitter area. Hence, the wireless power transmitter area may not visible per se; the light escape regions may not be visible per se; the electronics behind the top surface may not be visible per se; but, due to the light escaping from the top surface at the one or more outcoupling regions, the user may know that the area marked out by the one or more light outcoupling regions is the wireless power transmitter area. In this way, the user can position the electronic device at the right place for electrically powering.

Herein, the term "mark out" indicates that boundaries are set to the wireless power transmitter area. For instance, two light outcoupling regions may indicate the wireless power transmitter area in between them; three outcoupling regions, arranged in the form of a triangle, may indicate the wireless power transmitter area in between them; likewise this may apply to a larger number of outcoupling regions. Hence, in an embodiment the element comprises two or more light outcoupling regions. In a further embodiment, the one or more light outcoupling regions enclose the wireless power transmitter area. For instance, a circular light outcoupling region may enclose a round wireless power transmitter area. Likewise, a square light outcoupling region may enclose a square wireless power transmitter area.

Note that the wireless power transmitter area may be larger than the area of the transmitter area, due to the extension of the electrical fields. The wireless power transmitter area, thus the area wherein electrical powering may be applied to an electrical device, may be in the range of about 1-2 times the area of the area of the transmitter area (see also above).

As will be clear to the person skilled in the art, the element may in an embodiment, comprise a plurality of wireless power transmitter areas, wherein the one or more light outcoupling regions mark out the (plurality of) wireless power transmitter areas.

As indicated above, this light outcoupling region(s) is (are) not marked per se. Otherwise, the one or more lighting units would not be necessary for indication. In general, the top surface will not show any indication where the wireless power transmitter unit and/or the one or more lighting units are located behind the top surface (and/or where one or more light spots will be found when the one or more lighting units are switched on).

The control of the lighting arrangement, i.e. at least the one or more lighting units, may be done in several ways. In an embodiment, the element, or combination of element and control unit, further comprises a user input device for controlling the lighting arrangement. For instance, this may be a simple on-off switch, which can be used to switch on the one or more lighting units. In this way, the user can find the one or more wireless power transmitter area(s) where the device can be brought in the vicinity of, for subsequent electrically powering the device.

In an embodiment, alternatively or additionally, the electronic device, or the combination of the element and the control unit, comprises such user input device for controlling the lighting arrangement of the element. This may imply communication between the electronic device and the element. Hence, in embodiment, the element or the electronic device comprises a control unit. In another embodiment, a separate control unit is provided, which may in an embodiment communicate with the element and optionally with the electronic device. Some of these embodiments are further described below.

In an embodiment, the element may further comprise a control unit. In yet another embodiment, the combination of control unit and element is provided. In yet a further embodiment, the electronic device (comprising a wireless power receiver unit) comprises the control unit. The control unit may be configured to control the lighting arrangement as function of one or more of a signal of a user input device and a signal containing information on one or more parameters of an electronic device (wherein the electronic device comprises a wireless power receiver unit) and wherein the one or more parameters are selected from the group consisting of the presence of the electronic device, the identity of electronic device, the type of wireless power receiver unit of the electronic device, the distance between the wireless power receiver of the electronic device and the transmitter area of the wireless power transmitter unit, and the required power of the electronic device.

Hence, in an embodiment, the control unit is configured to control the lighting arrangement as function of a signal containing information on one or more parameters of an electronic device selected from the group consisting of (1) the presence of the electronic device, (2) the identity of electronic device, (3) the type of wireless power receiver unit of the electronic device, (4) the distance between the wireless power receiver of the electronic device and the transmitter area of the wireless power transmitter unit, and (5) the required power of the electronic device. Therefore, in an embodiment the control unit is configured to control the lighting arrangement as function of a signal containing information on the presence of the electronic device. Therefore, in another embodiment the control unit is configured to control the lighting arrangement as function of a signal containing information on the identity of electronic device. Therefore, in yet another embodiment, the control unit is configured to control the lighting arrangement as function of a signal containing information on the type of wireless power receiver unit of the electronic device. Therefore, in again an embodiment the control unit is configured to control the lighting arrangement as function of a signal containing information on the distance between the wireless power receiver of the electronic device and the transmitter area of the wireless power transmitter unit. Therefore, in yet a further embodiment, the control unit is configured to control the lighting arrangement as function of a signal containing information on the required power of the electronic device. As indicated above, one or more embodiment may be combined.

Communication between the electronic device and the element, or more precisely between the wireless power transmitter unit and the wireless power receiver unit are known in the art, and are for instance described in the above mentioned Standard (System Description Wireless Power Transfer Volume I: Low Power; Part 1: Interface Definition, Version 1.0.2, April 2011), which is herein incorporated by reference.

In a further aspect, the invention further provides an electronic device, configured to be able to be wireless electrically powered by the wireless power transmitter unit of the element. In yet a further embodiment, such electronic device is configured to be able to communicate with the element. In a specific embodiment, such electronic device further comprises a (re)chargeable battery, which may be configured to be electrically powered by the wireless power transmitter unit.

In yet a further embodiment, the invention also provides a combination of the element, as described herein, and an electronic device (as for instance described above), comprising a wireless power receiver unit configured to be able to receive wireless power from the wireless power transmitter unit of the element. Further, such combination may include the above indicated control unit. Hence, in a further embodiment, the combination comprises such control unit, wherein the control unit may especially be configured to control the lighting arrangement as function of one or more of a signal of a user input device and a signal containing information on one or more parameters of an electronic device, wherein the electronic device comprises a wireless power receiver unit, and wherein the one or more parameters are selected from the group consisting of the presence of the electronic device, the identity of electronic device, the type of wireless power receiver unit of the electronic device, the distance between the wireless power receiver of the electronic device and the transmitter area of the wireless power transmitter unit, and the required power of the electronic device. The control unit may be integrated in the element, may be integrated in the electronic device, or may even be a separate device. The control unit may especially be configured to communicate with the element (especially the wireless power transmitter unit and the lighting arrangement) and with the electronic device.

Hence, the above invention also provides the use of a lighting arrangement hidden behind a top surface of an element cover, of an element comprising a wireless power transmitter unit also behind the top surface, for marking out by light a wireless power transmitter area on (at) said top surface for positioning an electronic device comprising a wireless power receiver unit configured for receiving wireless power from the wireless power transmitter unit. This lighting arrangement may be part of the element described above, which may on its turn be part of the combination of element and control unit.

Especially, the wireless power receiver unit configured of the electronic device is configured to be able to be electrically powered by the wireless power transmitter unit of the element.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig.1a-1f schematically depict various aspects of the element;
Fig. 2a-2d schematically depict various configurations of the (invisible) wireless power transmitter area and light outcoupling regions;
Fig. 3a-3d schematically depict some further embodiments;
Fig. 4a-4g schematically depict some combinations of the element with other apparatus, such as a chargeable electronic device; and
Fig. 5a-5c schematically depict some variants on power transfer and communication.

The drawings are not necessarily on scale.

### DETAILED DESCRIPTION OF THE EMBODIMENTS

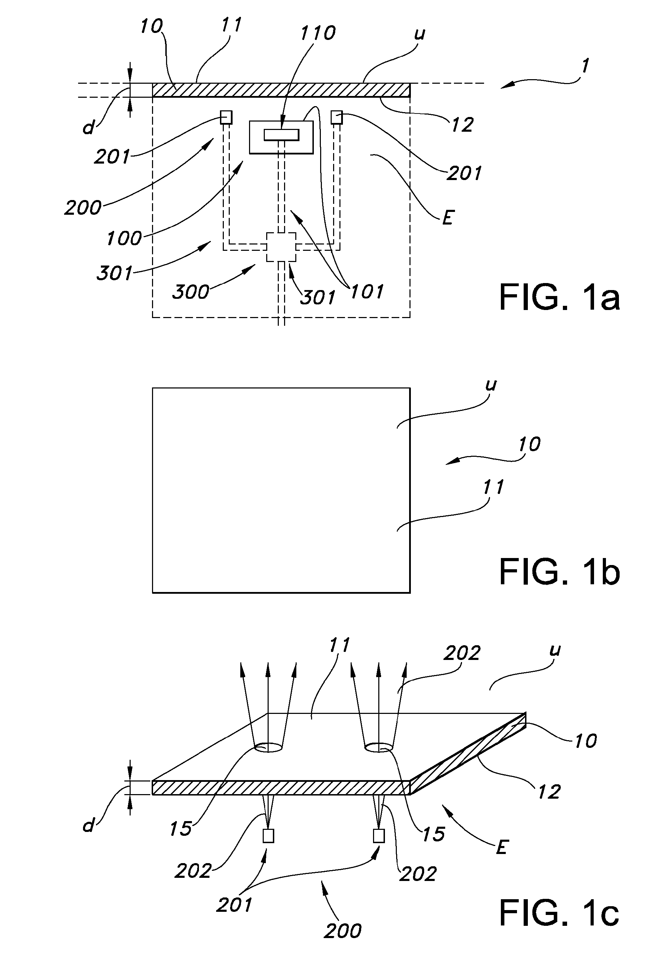

Fig. 1a schematically depicts an element 1 comprising an element cover 10 with a top surface 11 and a back surface 12. The top surface has a user side U and an element side E. Anything behind the top surface, when seen from the user side U is considered element side E even the layer forming the element cover, defined by top surface 11 and back surface 12. The top surface 11 has a top surface area, which can be seen from above in fig. 1b.

The element cover 10 has a thickness d, for instance 0.5-1.5 mm. the element may be a table, a desk, a floor, a wall, etc. etc.

The element 1 comprises a wireless power transmitter unit 100 having a transmitter area 101. The transmitter area 101, and here the entire wireless power transmitter unit 100, are configured behind the top surface 11, thus at the element side E. In general, this transmitter area 101 will also be behind the back surface 12, but in principle, the transmitter area may also be embedded in the element cover 10 (but behind the top surface 11).

The element 1 further comprises a lighting arrangement 200 comprising one or more lighting units 201 for generating visible light; the one or more lighting units 201 are configured behind the top surface 11 at the element side E.

The element may further comprise a power supply and/or control unit 300, further indicated as control unit 300. Reference 301 indicate wired electrical connections. These connections 301, as well as the control unit 300 are drawn dashed, because they may be arranged in another way and/or are optional (see elsewhere herein).

The transmitter area 101 and the one or more lighting units 201 when seen from the user side U are hidden behind the top surface 11. This can also be derived from fig. 1b, which is a schematical top view of the element 1. The element cover is configured in such a way, that the items behind the top surface 11 are not visible to a user (with the human eye). Hence, with the human eye, the lighting unit(s) 201 and the transmitter area 101 are not visible. This provides a taut view, like by designers and consumers, but has the disadvantage that it is not clear where to arrange an electronic device for being electrically powered by the wireless power transmitter unit 100.

To this end, the element cover 10, while being an integer surface, without through holes, has some transmissivity for the light of the lighting units. This is schematically depicted in fig 1c, wherein the lighting units 201 are switched on (in fig. 1a they were switched off).

The lighting units 201 provide lighting unit light 202. As the element cover 10 has some transmissivity, part of the lighting unit light 202 will escape from the top surface 11. The regions where light escapes are indicated with reference 15, and are further indicated as light outcoupling regions 15. In this way, lighting can be used to mark out the position where an electronic device may be arranged to be electrically powered by the wireless power transmitter unit 100.

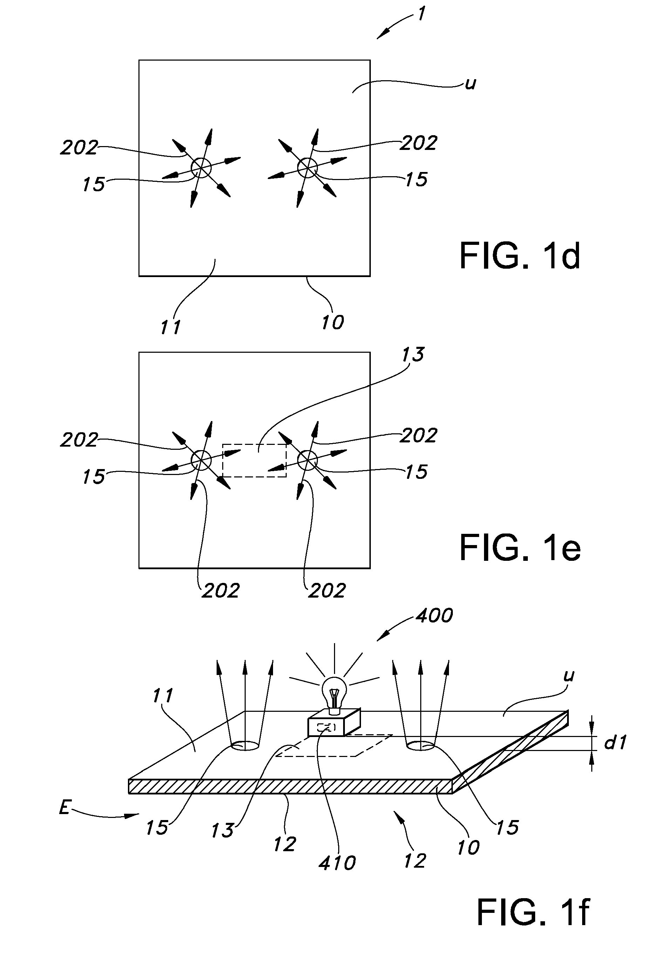

Fig. 1d schematically depicts the same top view as fig. 1b, but now with the lighting units 201 switched on. Lighting unit light 202 escapes from the top surface 11. Fig. 1e schematically depicts that the two lighting units 201, or more precisely their light, of which part couples out at outcoupling regions 15, can be used to mark out an area where an electronic device can be brought in the vicinity of, such as by arranging on the top surface 11, for electrically powering. This area on the top surface 11, which is otherwise not marked or visible, but only marked out by the one or more light outcoupling regions 15 which are visible when the one or more lighting units 201 are switched on, is herein further indicated as wireless power transmitter area 13.

Fig. 1f schematically depicts the situation wherein the electronic device, indicated with reference 400, is brought in the vicinity (here yet at a distance d1) of the transmitter area 13. Electrically powering of the electronic device 400 may start when the distance d1 is small enough and overlap with the transmitter area 13 is well enough. The wireless power transmitter unit 100 is configured to provide wireless power to a wireless power receiver unit 410 of the electronic device 400. The electronic device may for instance be a wireless keyboard, a wireless mouse, a wireless lamp, a wireless ventilator, a wireless electric odorizer, a wireless electric shaver, a cell phone, a laptop, a PDA, etc. etc.

With the above element, the top surface 11 thus further comprises one or more light outcoupling regions 15, for outcoupling of the lighting unit light 202 of the one or more lighting units 201, for marking out the wireless power transmitter area 13. Note that the wireless power transmitter area 13 and the light outcoupling regions are not visible per se. Only the light escaping from the top surface, create light spots or light outcoupling regions 15, indicating where to find the wireless power transmitter area 13. Hence, the light outcoupling regions as schematically depicted in figs. 1c-1f are not through holes put bright spots at the top surface 11.

This is especially of relevance when the wireless power transmitter area 13 is smaller than the total area of the top surface. Especially, the ratio of a wireless power transmitter area at the top surface 11 and the total top surface area is equal to or smaller than 0.7 . For instance referring to figs. 1e and 1f, the ratio will be in the order of about 0.1.

Referring amongst others to above figures, and especially fig. 1a, optionally, the lighting unit 201 may comprise a light source configured to provide lighting unit light that is at least partly to be converted by a luminescent material (the term "luminescent material" herein may also refer to a plurality of luminescent materials). In such embodiment, the reference 201 may refer to such light source, and luminescent material may be configured downstream of such light source, for instance at the back surface 12 and/or embedded in the element cover 10. Especially when applied at the back surface, the luminescent material may only be provided locally, i.e. between the light source and the back surface 12. Hence, discrete regions of luminescent material may be applied at the back surface 12. This embodiment and variants may also be applied in relation to the above and below described embodiments.

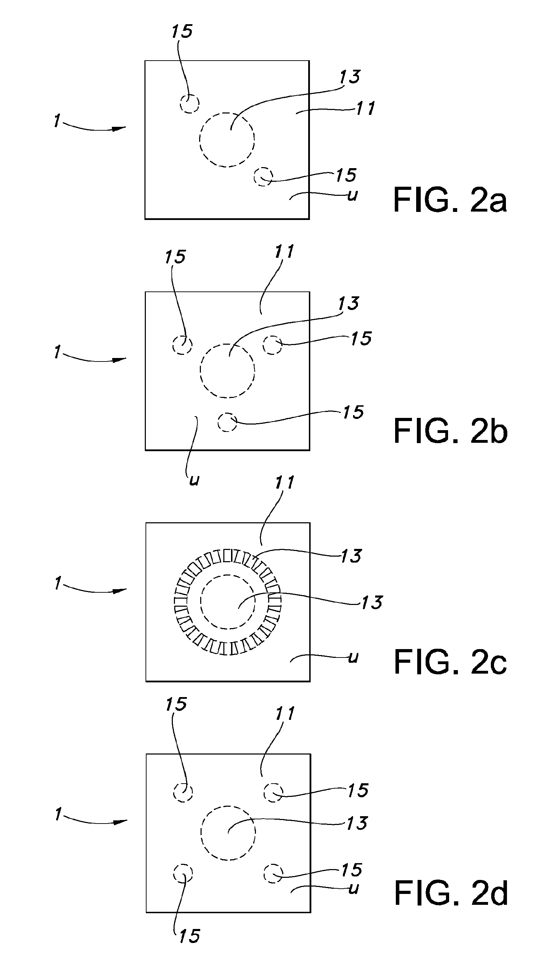

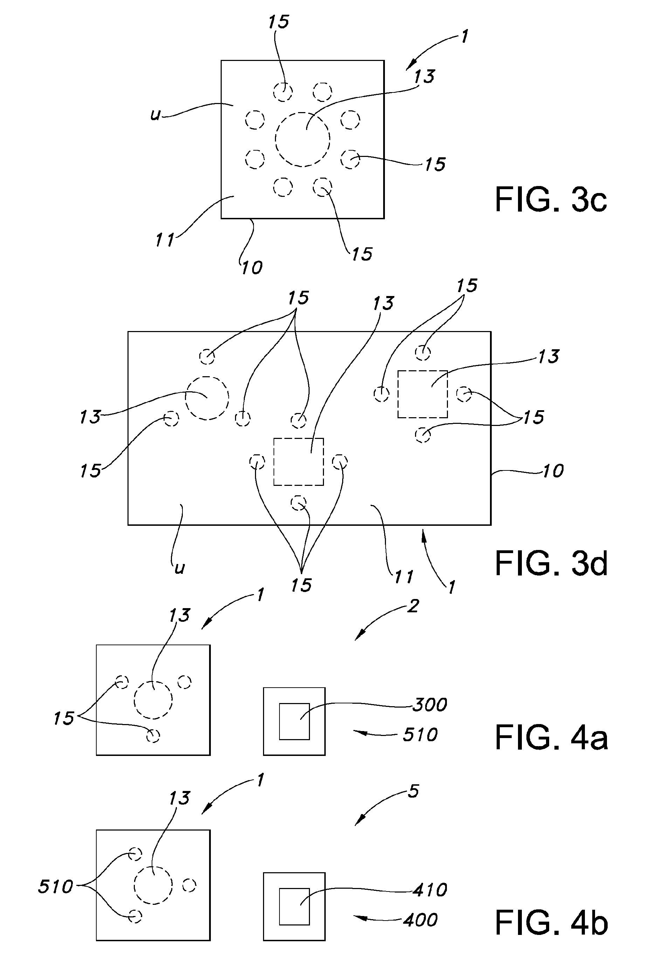

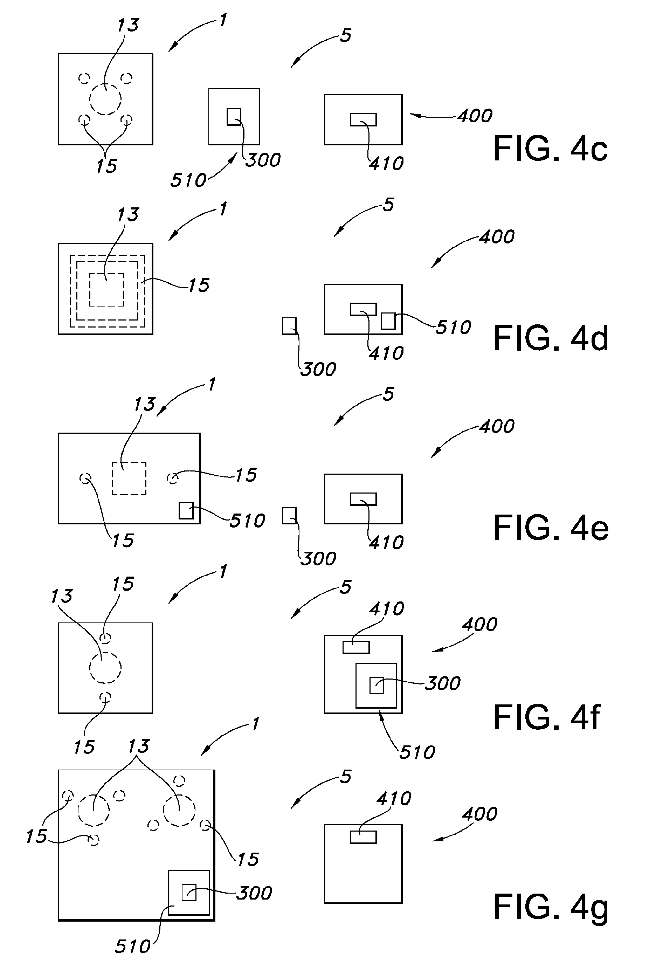

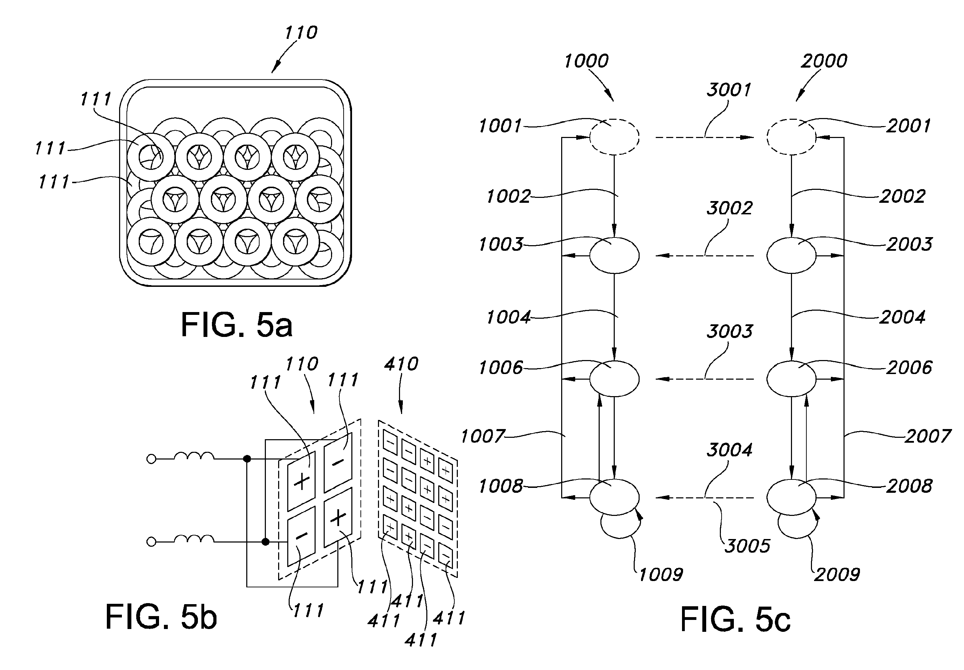

Figs. 2a-2d schematically depict a non-limiting number of configurations for marking out the wireless power transmitter areas 13, of which the shape is also non-limitingly varied. Further variations can also be found in figs. 3c-3d and 4a-4g. Figs. 2a-2c schematically depict circular wireless power transmitter areas 13, for instance based on coils and inductive power transmission. Fig. 2d schematically depicts a square wireless power transmitter areas 13, for instance based on a plurality of coils in several layers (see also fig. 5a) and inductive power transmission, or plates based on capacitive power transmission (see also fig. 5b). Fig. 2c shows the light outcoupling circumferentially enclosing the wireless power transmitter area 13 (another variant is found in fig. 4d).

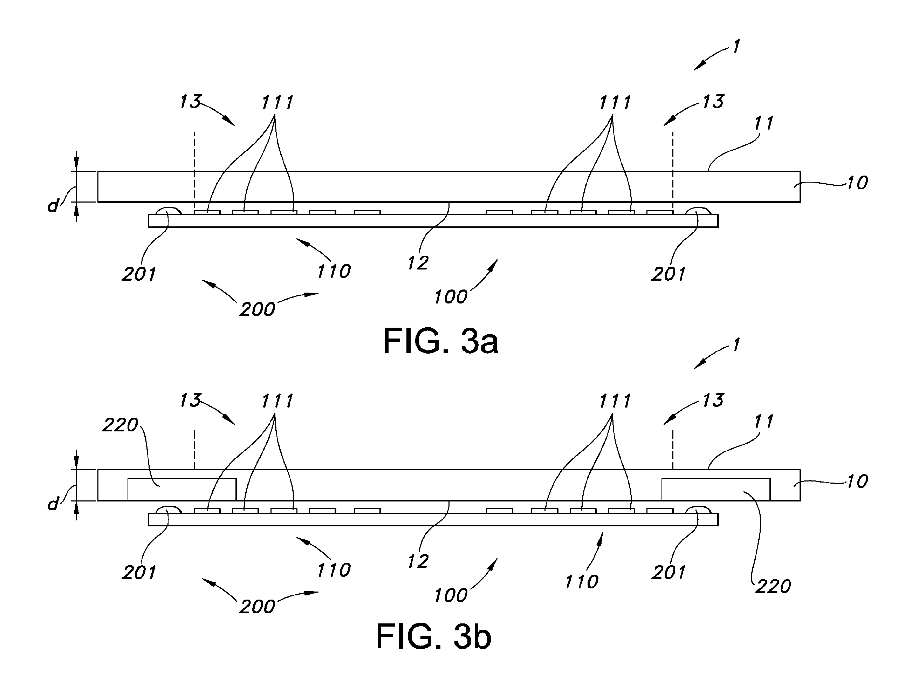

Fig. 3a/3b schematically depict embodiments, in cross-sectional view, with coils 111 for inductive power transfer. Note that coils 111 are only depicted by way of example, and also plates for capacitive power transfer might have been depicted. The relevant aspect in these drawings are that in fig. 3b element cover 100 is an integral piece with parallel top surface 11 and back surface 12, without thinner elements or cavities. In fig. 2b, one or more cavities are comprised by the element cover 10, indicated with references 222, which may facilitation penetration of lighting unit light 201 through the element cover 10. Note that notwithstanding the presence of those one or more cavities 222, the lighting units when seen from the user side U are still hidden, and not visible (in the off state) by a human user. Hence, fig. 3a schematically depicts an embodiment wherein the element cover has a constant thickness d, and fig. 3b schematically depicts an embodiment wherein the element cover 10 has holes or cavities 222 at the back surface 12.

Fig. 3c-3d schematically depict some further variants of how to mark out with lighting unit light (i.e. the spots or light outcoupling regions 15) the wireless power transmitter area(s) 13, wherein fig. 3d schematically depicts an embodiment wherein the element comprises a plurality of wireless power transmitter areas 13.

Figs 1a-3d schematically depicted some embodiments and variants of the element. Figs. 4a-4g schematically depict combinations of the element with the control unit and/or a user input device.

Fig. 4a schematically depicts an embodiment of a combination 2 of the element 1 and a user input device 510. In an embodiment, the user input device 510 may be comprised by the element 1. The user input device 510 may be a simple on/off switch, for (at least) switching on/off the lighting units for providing the outcoupling regions 15 to mark out the wireless power transmitter area 13. However, the user input device 510 may also comprise a control unit 300. This control unit 300 may provide more functions and/or control the lighting arrangement 200 in a remote way. For instance, the control unit 300 may be configured to control the lighting arrangement as function of one or more of a signal (on/off switch, verbal command, etc.) of the user input device 510 and a signal containing information on one or more parameters of an electronic device 400, wherein the one or more parameters are selected from the group consisting of (a) the presence of the electronic device 400, (b) the identity of electronic device 400, (c) the type of wireless power receiver unit 410 of the electronic device 400, (d) the distance d between the wireless power receiver 410 of the electronic device 400 and the transmitter area 101 of the wireless power transmitter unit 100, and (e) the required power of the electronic device 400, etc.

Fig. 4b schematically depicts a combination of the element 1 and the electronic device 400, wherein the electronic device 400 comprises a wireless power receiver unit 410, which is configured to be electrically powereable by the wireless power transmitter unit 100 of the element 1.

Figs. 4c-4g schematically depict a non-limiting number of arrangements of control unit 300, with in fig. 4c in a separate user input device 510; in fig. 4d a separate control unit 300, and with the user input device 510 integrated in the device 400 (for instance on the device you can use the user input device to command the element 1 to switch on the one or more lighting units and mark out the wireless power transmitter area(s) 13); in fig. 4e the other way around, with the user input device 510 integrated in the element 1; in fig. 4f the user input device 510 and control unit 300 integrated in the electronic device 400; and in fig. 4g the other way around the user input device 510 and control unit 300 integrated in the element 1.

Fig. 5a schematically depicts how larger wireless power transmitter areas may be created. This may be done by providing the wireless power transmitter unit 100 for instance with a plurality of coils 111, in layers, especially with at least three layers over each other, wherein the layers translated to each other as to get the best packing. This is known in the art, and for instance described in 3.3 of the above described standard, which is herein incorporated by reference. This may allow freer positioning. The area formed by the coils 111 could be considered the transmitter area.

Fig. 5b schematically depicts a solution for capacitive power transfer, which allows relative free positioning (of the electronic device, i.e. the wireless power receiver unit 410 of such device). References 111 indicate the different inductive plates of the transmitter and likewise reference 411 indicate the different inductive plates of the receiver. Here, the wireless power receiver unit 410 is pixilated, and pixel size is designed so that two transmitter plates cannot be shorted by one pixel. Each pixel of the receiver may be connected to its own rectifying half-bridge (not depicted). The advantage is that the rectifiers may all be self configuring; they force current to flow in the correct direction.

The area formed by the plates 111 could be considered the transmitter area.

Fig. 5c schematically depicts an embodiment of communication & control. Reference 1000 indicates the transmitter part and reference 2000 the receiver part. References 1001 and 2001 indicate the start of communication, with reference 3001 being a signal sent from the transmitter. The transmitter provides a signal end senses for presence of an object (potential receiver); receiver waits for signal. The receiver may indicate its presence by communicating received signal strength, indicated with 3002, and the transmitter may detect response of the receiver indicated with reference 3003. This is the "ping" action, indicated with references 1003/2003. When the receiver receives the signal of the transmitter, 3001, or the transmitter detects the receiver, 3002, the control unit may control the lighting arrangement to indicate this. For instance, the one or more lighting units may be switched on or the intensity of the light increases, or the color changes, or the light starts blinking, or the blinking frequency changes, or combinations of two or more thereof may be executed.

References 1006 and 20006 indicate the identification & configuration stage, wherein the receiver communicates its identifier and require power, indicated with reference 3003, and the transmitter may configure for power transfer. Reference 3004 indicates the control of date and 3005 the end of the power; references 1008/2008 indicate the power transfer stage, which may constantly be adapted based on the data; the adaptation and renewal of status are indicated with references 1009/2009. Reference 1007 indices the options of "end transfer", or "error", or "timeout"; and reference 2007 indicates "end of transfer "or "signal lost". Also one or more of these may be accompanied with changing lighting behavior of the lighting arrangement.

Hence, a wireless power system consisting of at least one sender coil and at least one receiver coil may be provided. At least one sender coil may be integrated in a larger passive surface such that the position of the coil(s) is not visible to a user. The area of the passive surface is so large that a substantial part of the area is not covered by the integrated coil. The receiver coil is connected to a load to dissipate the power in. Further, a light emitting indication system may also be integrated in said passive surface and which is not visible when the light is switched off. Said indication system is positioned such that it indicates the locations within which efficient power transfer between the power transmitting and power receiving coils is possible. For illustration this area is indicated by the dotted lines, meaning that the power receiver can be placed anywhere within that area. Further, a switch or other type of user input device that switches on the light emitting indication system on and off may be provided.

A triggering system for the user of the appliance, in which said receiver coil and load are integrated, may also be provided. The triggering system will allow the user to indicate that he wants to position the appliance on the active part of said surface with the intention to supply power to said load. The triggering can be started by the user, with the effect that said switch is closed and the indication system is switched on. The triggering system may be integrated in the control unit. Alternatively, the triggering system is such that it acts quasi-intelligent: for instance, the fact than an appliance is brought close to the coil(s) will be used as a trigger to start communication. Alternatively the light could be switched on when the system senses a change in mutual inductance and switch off when the system mutual inductance becomes stable again (either high or low). (Optional) a method to switch the light emitting indication system in a mode that indicates when the appliance has been placed correctly. This could for instance be a flickering indication system. After correct placement the indication system can be switched off.

When a receiving coil and load (such as a lamp; see also fig. 1f) is brought towards the surface, the user can start the communication with the power infrastructure. As a result, the indication system will be lit, indicating the position of the coils. This will aid the user to find the correct position to place the receiving coil with its load. When the approximate position is known, a more precise alignment of the coils could be facilitated by the indication system. This could done by flashing the indicator LEDS at a higher rate when the alignment improves. Alternatively it can be done with a magnetic alignment, giving tactile feedback, or by a sound feedback. Yet alternatively, the receiving coil can be integrated in a housing with apertures that match the position of the indicator LEDs. Correct alignment will give a unique light pattern in this way.

The location of the communication system (herein further indicated as control unit) can be in the receiver device or in the plate with the sender infrastructure. The control unit can also be a separate device. This choice will be dependent on the application;

The light emitting indication system is meant to unambiguously indicate the most optimal position of where the device that contains the load and the receiver coils should be placed to receive power. For practical applications this may be not be a single point, but it may be an island that may be smaller than the complete wall, ceiling or desk surface, etc.

The lighting units of the light emitting indication system can be powered by the wireless power system. The light emitting indication system can use a plurality of LEDs to indicate the active area, but it is also possible to spread the light with, for instance, light guides to spread the light.

The communication can make use of the infrastructure of sender coils and the receiver coils that is already there to transmit signal. Alternatively it is possible to use any means like RF or IR.

## Claims

1. A combination of a control unit (300) and an element (1), the element comprising:
- an element cover (10) comprising a top surface (11), with a user side (U) and an element side (E), the top surface (11) having a top surface area,
- a wireless power transmitter unit (100) having a transmitter area (101) configured behind the top surface (11) at the element side (E),
- a lighting arrangement (200) comprising one or more lighting units (201) for generating visible light (202), wherein the one or more lighting units (201) are configured behind the top surface (11) at the element side (E),
wherein the transmitter area (101) and the one or more lighting units (201) when seen from the user side (U) are hidden behind the top surface (11), wherein the top surface (11) further comprises one or more light outcoupling regions (15), for outcoupling of the lighting unit light (202) of the one or more lighting units (201), and wherein the one or more light outcoupling regions (15) mark out the wireless power transmitter area (13); and
the control unit (300) being configured to control the lighting arrangement (200) as function of one or more of a signal of a user input device (510) and a signal containing information on one or more parameters of an electronic device (400), wherein the electronic device (400) comprises a wireless power receiver unit (410), and wherein the one or more parameters are selected from the group consisting of(1) the presence of the electronic device (400), (2) the identity of electronic device (400), (3) the type of wireless power receiver unit (410) of the electronic device (400), (4) the distance (d) between the wireless power receiver (410) of the electronic device (400) and the transmitter area (101) of the wireless power transmitter unit (100), and (5) the required power of the electronic device (400).

2. The combination of the control unit (300) and the element (1) according to claim 1, wherein the element (1) comprises two or more light outcoupling regions (15).

3. The combination of the control unit (300) and the element (1) according to any one of the preceding claims, wherein the one or more light outcoupling regions (15) enclose the wireless power transmitter area (13).

4. The combination of the control unit (300) and the element (1) according to any one of the preceding claims, wherein the wireless power transmitter unit (100) comprises a wireless inductive power transmitter (110).

5. The combination of the control unit (300) and the element (1) according to any one of the preceding claims, wherein the wireless power transmitter unit (100) comprises a wireless capacitive power transmitter (110).

6. The combination of the control unit (300) and the element (1) according to any one of the preceding claims, wherein the element cover (10) is impermeable for visible light traveling in a direction from the user side (U) to the element side (E).

7. The combination of the control unit (300) and the element (1) according to any one of the preceding claims, wherein the element cover (10) downstream of the one or more lighting units has a light transmission in the range of 1-30 %.

8. The element (1) according to any one of the preceding claims, wherein the element is selected from the group consisting of a piece of furniture, an internal piece of a transport vehicle, a part of a wall, a wall, a part of a floor, a floor, a part of a ceiling, and a ceiling.

9. The combination of the control unit (300) and the element (1) according to any one of the preceding claims, comprising a plurality of wireless power transmitter areas (13), wherein the one or more light outcoupling regions (15) mark out the wireless power transmitter areas (13).

10. The combination of the control unit (300) and the element (1) according to any one of the preceding claims, further comprising a user input device (510) for controlling the lighting arrangement (200).

11. The combination of the control unit (300) and the element (1) according to any one of the preceding claims, wherein the ratio of a wireless power transmitter area at the top surface (11) and the total top surface area is equal to or smaller than 0.

12. A combination of the element (1), as defined in any one of claims 1-11 and the electronic device (400), comprising the wireless power receiver unit (410) configured to be able to receive wireless power from the wireless power transmitter unit (100) of the element (1).

13. A combination of the control unit (300) and the element (1) as defined in any one of claims 1-11 and the electronic device (400), comprising the wireless power receiver unit (410) configured to be able to receive wireless power from the wireless power transmitter unit (100) of the element (1).

14. Use of a lighting arrangement (200) hidden behind a top surface (11) of an element cover (10), of an element (1) comprising a wireless power transmitter unit (100) also behind the top surface (11), for marking out by light a wireless power transmitter area (13) on said top surface for positioning an electronic device (400) comprising a wireless power receiver unit (410) configured for receiving wireless power from the wireless power transmitter unit (100).

15. Use according to claim 14, wherein the combination of control unit (300) and element (1) is applied.
